# FASCICULE DE BREVET EUROPEEN

(11) **EP 3 701 688 B1**
(45) Date de publication et mention de la délivrance du brevet: **01.09.2021**
(21) Numéro de dépôt: 18814947.0
(22) Date de dépôt: 13.12.2018
(51) Int. Cl.: H04L 12/805

(54) **CORRECTION D'UN PAQUET ICMP LIÉ À UN PAQUET IP AYANT ÉTÉ TRAITÉ PAR UN ALG**
KORREKTUR EINES MIT EINEM ALG-BEHANDELTEN IP-PAKET VERKNÜPFTEN ICMP-PAKETS
CORRECTION OF AN ICMP PACKET LINKED TO AN IP PACKET HAVING BEEN TREATED BY AN ALG

(30) Priorité: 19.12.2017 FR 1762464
(43) Date de publication de la demande: 02.09.2020
(73) Titulaire: SAGEMCOM BROADBAND SAS, 92500 Rueil-Malmaison (FR)
(72) Inventeur: MEUNIER, Brice, 92500 Rueil Malmaison (FR); CLUZEAU, Fabrice, 92500 Rueil Malmaison (FR)
(74) Mandataire: Cabinet Camus Lebkiri
(86) Numéro de dépôt international: PCT/EP2018/084668
(87) Numéro de publication internationale: WO 2019/121281

(56) Documents cités:
- US-A1- 2015 188 833

## Description

### Domaine Technique

La présente invention se rapporte de manière générale au routage de données dans une passerelle entre un réseau privé LAN (de l'anglais : *Local Area Network pour réseau privé)* et un réseau public WAN (de l'anglais : *Wide Area Network pour réseau privé* , par opposition au réseau local ou LAN), comprenant un protocole de passerelle de couche d'application ALG (de l'anglais « *Application Layer Gateway »* pour passerelle de couche d'application), pour l'établissement d'une connexion multichemins entre au moins un équipement informatique d'un réseau privé et un équipement informatique ou équipements de réseau informatique d'un autre réseau public.

Plus précisément, les messages sont conformes au protocole de contrôle de messages Internet ICMP. (L'ICMP est l'acronyme de l'anglais : Internet Control Message Protocol pour protocole de message de contrôle d'internet). Le protocole ICMP permet de gérer les informations relatives aux erreurs détectées par les machines connectées au réseau Internet. Ainsi, le protocole ICMP est utilisé des routeurs pour reporter une erreur. Les messages d'erreur ICMP sont transportés sur le réseau sous forme de datagramme, comme n'importe quelle donnée dans un paquet d'un message de protocole de contrôle sur internet ICMP.

L'invention concerne plus particulièrement un procédé de correction d'un paquet d'un message de protocole de contrôle sur Internet ICMP issue d'un paquet SIP (de l'anglais : « Session Initiation Protocol » pour protocole d'ouverture de session ) contenant une taille dépassant la taille de transmission maximum MTU (de l'anglais : « Maximum Transmission Unit » pour unité de transmission maximum) d'un routeur, lors d'un acheminement d'un paquet entre un réseau privé et un réseau public par le biais d'un intégrateur de passerelle de couche d'application ALG.

L'invention trouve des applications, en particulier, dans les appels utilisant le protocole SIP dont les paquets sont traités par un protocole de passerelle de couche d'application ALG.

### Arrière-plan Technologique

L'ALG protocole de passerelle de couche d'application est une technique utilisée dans les réseaux informatiques, pour permettre d'augmenter la sécurité d'un pare-feu ou NAT entre un réseau local et un réseau public. L'intégrateur de protocole de passerelle de couche d'application ALG est un composant logiciel qui gère des protocoles d'applications spécifiques comme le SIP et le FTP (de l'anglais File Transfer Protocol pour protocole de transfert de fichier). Par la suite, on se référera indifféremment à « intégrateur de passerelle de couche d'application » ou à « protocole de passerelle de couche d'application » pour parler de ce composant logiciel. Le protocole de passerelle de couche d'application ALG agit donc en intermédiaire entre un réseau public (Internet) et un réseau privé dans une passerelle qui peut comprendre des protocoles d'application. Par exemple, le protocole de passerelle de couche d'application ALG réécrit la couche protocolaire SIP pour permettre la translation entre un réseau privé LAN et un réseau public WAN. L'ALG apparaît comme le point de terminaison avant le routage de la passerelle, c'est-à-dire la sortie de la passerelle. L'ALG contrôle l'autorisation ou le refus du trafic vers une application du serveur. Il le fait en interceptant et en analysant un trafic spécifié, pour permettre au trafic de passer par la passerelle.

Lors d'un envoi d'un paquet d'un réseau interne à un réseau externe, le protocole de passerelle de couche d'application ALG peut convertir des informations, des adresses, dans une couche réseau du paquet. Cela peut entraîner des problèmes du fait que la taille du paquet peut dépasser une taille maximum de transmission d'un hôte, par exemple un routeur, entre un émetteur et le récepteur.

Il est connu qu'en cas de taille d'un paquet dépassant une taille de transmission maximum MTU d'un Hôte, par exemple un routeur, d'utiliser un protocole de message de contrôle d'internet ICMP qui est un message d'erreur, par exemple lorsqu'un service ou un hôte est inaccessible, envoyé à l'émetteur. Le routeur utilise le protocole de message de contrôle d'internet ICMP, pour transférer un paquet d'un message de protocole de contrôle sur internet ICMP vers l'émetteur comprenant une information sur la taille Maximum de transmission MTU de l'hôte en l'occurrence du routeur. Un flag DF (Don't Fragment) du paquet sortant permet de découvrir la taille Maximum de transmission MTU d'un chemin donné (appelé aussi « MTU discovery » de l'anglais découverte de la taille de transmission maximum MTU). Le long du chemin emprunté par un tel paquet, si l'un des hôtes ou routeurs traversés a un MTU plus petit que la taille du paquet émis, ce dernier sera rejeté et un paquet d'un message de protocole de contrôle sur internet ICMP, contenant une taille MTU de l'hôte qui le génère, sera envoyé afin d'informer la source.

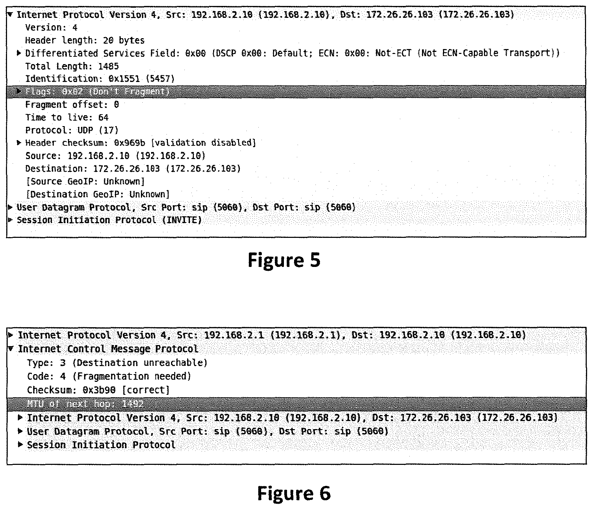

Un exemple de ce type de message est représenté par exemple sur la figure 6 qui est une copie d'une partie d'écran d'ordinateur, sur lequel on peut lire:
type 3 / code 4, "Fragmentation Needed
la valeur du MTU est dans un champ du paquet d'un message de protocole de contrôle sur internet ICMP: « taille de transmission maximum MTU of next hop » : 1492 dans cet exemple

Notamment, il est connu des valeurs usuelles de MTU pour diffèrent type de réseau :
sur Ethernet :
   MTU = 1 500 octets par défaut.
   MTU = 1500 à 9000 octets avec Jumbo frame.
sur PPPoE : MTU = 1 492 octets.
sur ADSL ou ATM25 : MTU = 1 468 octets.
sur ADSL en Wi-Fi MTU = 1 468 octets.

Ainsi, l'émetteur peut envoyer un paquet, par exemple de taille 1491 octets et si il n'y a pas de message d'erreur, il peut en déduire qu'il peut envoyer au moins des paquets de 1491 octets.

Si l'émetteur reçoit un paquet d'un message de protocole de contrôle sur internet ICMP avec l'information de fragmenter et comprenant l'information d'une taille de transmission maximum MTU d'une valeur de 1468 octets, l'émetteur peut soit fragmenter pour atteindre une taille inférieure ou égale à 1468 octets, soit réduire son message pour atteindre 1468 octets, notamment quand le paquet ne peut pas être fragmenté.

Par exemple, dans le cadre téléphonique en VoIP (Voix sur IP), un émetteur peut envoyer dans le réseau privé un paquet marqué « ne pas fragmenter » DF comprenant dans la couche 7 d'application un paquet SIP qui est un protocole S.I.P. Le paquet SIP est un protocole de signalisation avec une information permettant l'initialisation de sessions multimédias et peut être modifié par le protocole de passerelle de couche d'application ALG.

En effet, lors du traitement du paquet SIP par le protocole de passerelle de couche d'application ALG, l'entête du paquet SIP peut être modifié, par exemple une adresse IP ou un port peuvent être modifiés, des informations peuvent être ajoutées dans la couche applicative du paquet SIP. Cette modification peut entraîner une modification de la taille du paquet IP envoyé comme décrit précédemment.

Lorsqu'un paquet dépasse la taille de transmission maximale MTU d'un paquet pouvant être transmis en une seule fois (sans fragmentation), un routage renvoie vers l'émetteur un paquet d'un message de protocole de contrôle sur internet ICMP comprenant l'information d'un besoin de fragmenter (« Fragmentation Needed ») ainsi que la valeur maximum de transmission unit MTU.

Dans le cas où la valeur de taille de transmission maximum MTU est inférieure à la taille du paquet IP transmis par l'émetteur, l'émetteur peut soit renvoyer un paquet de plus petite taille ou peut accepter la fragmentation du paquet en renvoyant le même paquet mais sans le flag DF.

Cependant, du fait que le protocole de passerelle de couche d'application ALG a modifié le paquet, il est possible dans certains cas que la valeur de taille de transmission maximum MTU soit supérieure à la taille du paquet envoyé par l'émetteur et bien évidemment inférieure à la taille du même paquet traité par le protocole de passerelle de couche d'application ALG. L'émetteur ne comprend pas l'erreur mentionnée dans le paquet d'un message de protocole de contrôle sur internet ICMP étant donné que la taille du paquet envoyé par l'émetteur était inférieure à la valeur de transmission maximum.

L'émetteur ne comprenant pas, le processus d'appel s'arrête et donc échoue.

Un exemple va être décrit pour mieux illustrer ce problème :
L'émetteur envoie un paquet d'une taille de 1490 octets comprenant un paquet IP marqué « ne pas fragmenter » DF (de l'anglais : « don't fragment » pour ne pas fragmenter). Le protocole de passerelle de couche d'application ALG modifie le paquet SIP en modifiant notamment les adresses IP LAN par l'adresse IP WAN de la passerelle et peut modifier le port. Ces modifications entraînent dans cet exemple une augmentation de 7 octets de la taille du paquet.

La taille du paquet traité par le protocole de passerelle de couche d'application ALG est donc de 1490 octets + 7 octets soit 1497 octets. Le routage de la passerelle après le protocole de passerelle de couche d'application ALG pour passer du réseau privé LAN au réseau public WAN peut par exemple accepter la taille de 1497 octets, mais un des routages par exemple, dans le réseau public, n'accepte que 1492 octets, c'est-à-dire que la valeur de la taille de transmission maximum MTU est de 1492.

Ce routage, du fait du paquet SIP marqué DF, va renvoyer vers l'émetteur de ce paquet, un paquet d'un message de protocole de contrôle sur internet ICMP marqué « fragment needed » avec une valeur de taille de transmission maximum MTU de 1492. Celui-ci va passer la passerelle du réseau public vers le réseau privé puis l'émetteur va recevoir ce paquet d'un message de protocole de contrôle sur internet ICMP contenant la valeur de taille de transmission maximum MTU de 1492 alors que l'émetteur a envoyé un paquet d'une taille de 1490 octets.

Il y a donc un échec de l'appel. Cela est particulièrement dangereux dans le cas d'un appel d'urgence.
Il y a donc un besoin de remédier à ces problèmes. Un autre procédé de correction d'un paquet d'un message de protocole de contrôle Internet, ICMP, est décrit dans le document de brevet US2015/188833A1.

### Résumé de l'Invention

La présente invention est définie par les revendications annexées. L'invention permet de résoudre un problème posé par une augmentation de taille d'un paquet par le protocole de passerelle de couche d'application ALG et dans lequel l'augmentation de la taille ajoutée fait dépasser la valeur de la taille de transmission maximum MTU d'un routage entre l'émetteur et le récepteur.

L'invention vise à supprimer, ou du moins atténuer, tout ou partie des inconvénients de l'art antérieur précités.

A cet effet, un premier aspect de l'invention propose de modifier la valeur de la taille de transmission maximum MTU reçu dans le paquet d'un message de protocole de contrôle sur internet ICMP par une valeur inférieure fonction de la modification de la taille du paquet par le protocole de passerelle de couche d'application ALG.
A cet effet, un premier aspect de l'invention propose un procédé de correction d'un paquet d'un message de protocole de contrôle sur Internet ICMP, lors d'un acheminement d'un paquet entre un réseau privé et un réseau public ayant été traité par une passerelle de couche d'application ALG, comprenant des étapes de :
- lecture d'un paquet d'un message de protocole de contrôle sur Internet ICMP comprenant un message besoin de fragmenter et une valeur de taille de transmission maximale (MTU, maximum transmission unit) qui définit la taille de paquets de données maximale prise en charge dans un protocole de communication utilisé par un routage,
- calcul d'une valeur d'une taille (appelé aussi longueur) de traitement en comparant une taille d'un paquet non traité par l'intégrateur de passerelle de couche d'application ALG et une taille du même paquet traité par l'intégrateur de passerelle de couche d'application ALG,
- modification du paquet d'un message de protocole de contrôle sur internet ICMP en écrasant la valeur de la taille de transmission maximale MTU par une valeur de taille de paquet maximale réelle qui est fonction de la valeur de la taille de traitement,
- envoi, vers un émetteur ayant envoyé le paquet non traité (12t), du paquet d'un message de protocole de contrôle sur internet modifié ICMP.

Cela permet que la valeur de taille de la modification d'un paquet modifié par le protocole de passerelle de couche d'application ALG soit prise en compte dans le paquet d'un message de protocole de contrôle sur internet ICMP .

Il s'ensuit qu'à l'essai suivant, l'émetteur modifiera son paquet pour avoir une taille inférieure à la valeur de la taille de transmission maximum MTU réelle correspondant à une valeur de taille de transmission maximum MTU lorsque le paquet est modifié. La modification peut par exemple, dans le cas d'un appel par le Protocol SIP, être réalisée en supprimant un codec dans la partie message.

Selon un mode de réalisation, le procédé de correction d'un paquet d'un message de protocole de contrôle sur Internet ICMP, comprenant en outre une étape de :
- calcul de la valeur de taille de transmission maximale réelle en soustrayant la valeur calculée de la taille de traitement à la valeur de l'unité de transmission maximale du paquet d'un message de protocole de contrôle sur internet ICMP.

Ce mode de réalisation permet que la taille de paquet que peut envoyer l'émetteur soit la taille maximum avant traitement. L'émetteur peut donc supprimer un message tel que, un codec peu utile, ayant une taille correspondant au moins à la taille de transmission maximale réelle soustrait de la taille du paquet envoyé précédemment.

Selon un mode de réalisation pouvant se combiner avec le mode décrit précédemment, le procédé de correction d'un paquet d'un message de protocole de contrôle sur Internet comprend en outre une étape de :
- mesure de la taille du paquet non traité,
- mémorisation de la taille du paquet non traité,
- mesure de la taille du paquet traité par l'intégrateur de passerelle de couche d'application ALG,
- mémorisation de la valeur de la taille de traitement calculée.

Selon un mode de réalisation, le procédé comprend une étape d'envoi d'un paquet d'un message de protocole de contrôle sur Internet ICMP comprenant la valeur de taille de transmission maximale réelle MTU si la taille du paquet traité est supérieure à une taille prédéterminée, par exemple 1500 octets.

Cela permet de directement envoyer la valeur de taille de transmission maximale réelle directement. La taille prédéterminée pouvant être mise à jour dans le cas où une nouvelle taille de transmission maximum MTU connu est supérieure à cette taille prédéterminée.

Un deuxième aspect de l'invention concerne aussi un procédé de traitement d'un paquet entre un réseau privé et un réseau public comprenant le procédé de correction d'un paquet d'un message de protocole de contrôle sur Internet ICMP décrit précédemment ou un ou des modes de réalisation décrits précédemment. Ce procédé comprend en outre une étape de :
- réception d'un paquet, marqué ne pas fragmenter, non traité par un intégrateur de passerelle de la couche d'application ALG,
- transformation du paquet non traité par l'intégrateur de passerelle de la couche d'application ALG en un paquet traité.

Selon un mode de réalisation du procédé de traitement d'un paquet entre un réseau privé et un réseau public, le procédé comprend en outre une étape :
- d'envoi du paquet traité vers le destinataire sur un réseau public si la taille du paquet traité n'est pas supérieure à une taille de valeur d'une unité de transmission maximale (MTU, maximum transmission unit) du routage de la passerelle.

Ce mode de réalisation permet d'envoyer sur le réseau public le paquet uniquement si la valeur de la taille du paquet envoyé est inférieure à la taille de transmission maximum MTU de la passerelle.

Selon un mode de réalisation du procédé de traitement d'un paquet entre un réseau privé et un réseau public pouvant se combiner avec le mode de réalisation précédent, le procédé comprend en outre une étape de :
- génération d'un paquet d'un message de protocole de contrôle sur Internet ICMP si la taille du paquet traité est supérieure à une taille de valeur d'une unité de transmission maximale MTU, et dans lequel l'étape de modification du paquet d'un message de protocole de contrôle sur Internet est réalisée.

Cela permet de modifier directement dans le routage de la passerelle du protocole de passerelle de couche d'application ALG d'envoyer la taille maximum de transmission réelle.

Selon un mode de réalisation du procédé de traitement d'un paquet entre un réseau privé et un réseau public pouvant se combiner avec les modes de réalisation précédents, le paquet du message est un paquet IPV4 ou IPV6.

Selon un mode de réalisation du procédé de traitement d'un paquet entre un réseau privé et un réseau public pouvant se combiner avec les modes de réalisation précédents, la couche d'application du message envoyé est un protocole de signalisation SIP.

Cela permet d'émettre un appel en passant par un protocole de passerelle de couche d'application ALG.

Selon un exemple de ce mode de réalisation le paquet SIP contient une requête INVITE ou BYE.

Selon un mode de réalisation du procédé de traitement d'un paquet entre un réseau privé et un réseau public pouvant se combiner avec les modes de réalisation précédents, la couche d'application du message est un protocole de transfert de fichier FTP.

Un troisième aspect de l'invention concerne aussi un intégrateur de protocole de passerelle de couche d'application ALG comprenant le procédé de correction décrit précédemment avec ou sans un ou des modes de réalisation décrit précédemment.

Un quatrième aspect de l'invention concerne aussi un produit de « Logiciel d'ordinateur » comprenant l'intégrateur de passerelle de couche d'application ALG selon le troisième aspect de l'invention.

Un cinquième aspect de l'invention concerne aussi un routeur comprenant le produit de « Logiciel d'ordinateur » comprenant l'intégrateur de passerelle de couche d'application ALG selon le quatrième aspect de l'invention.

Un sixième aspect de l'invention concerne aussi un réseau privé LAN comprenant un routeur selon le cinquième aspect de l'invention et au moins un appareil apte à envoyer un paquet au routeur, notamment un paquet SIP comprenant une requête INVITE.

Un septième aspect de l'invention concerne aussi un dispositif d'une passerelle de couche d'application ALG permettant la communication entre un réseau privé et un réseau public, dans lequel le dispositif de passerelle comprend :
- une entrée privée de données configurée pour recevoir des données d'un réseau privé LAN,
- une entrée publique de données configurée pour recevoir des données d'un réseau public WAN,
- une mémoire de données permettant de mémoriser des données
- une mémoire de programme comprenant :
   i) un programme de lecture d'un paquet d'un message de protocole de contrôle sur Internet ICMP comprenant un message besoin de fragmenter et une valeur d'une unité de transmission maximale (MTU, maximum transmission unit) qui définit la taille de paquets de données maximale de données maximale prise en charge dans un protocole de communication utilisé par un routage,
   ii) un programme de calcul d'une valeur de la taille de traitement en comparant la taille d'un paquet non traité par l'intégrateur de passerelle de couche d'application ALG et la taille du même paquet traité par l'intégrateur de passerelle de couche d'application ALG,
   iii) un programme d'écriture pour modifier le paquet d'un message de protocole de contrôle sur internet ICMP en écrasant la valeur de l'unité de transmission maximale par une valeur de taille de paquet maximale réelle qui est fonction de la valeur de la taille de traitement,
   iv) un programme d'envoi vers un émetteur ayant envoyé le paquet non traité dans l'entrée privée, du paquet d'un message de protocole de contrôle sur internet modifié (ICMP).

Selon un mode de réalisation, le dispositif d'une passerelle de couche d'application est un routeur.

Un huitième aspect de l'invention concerne aussi un produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé de correction ou du procédé de traitement décrit précédemment sans ou avec les différents modes de réalisation décrit.

Un neuvième aspect de l'invention concerne aussi un support d'enregistrement de données lisible par une machine comprenant un processeur, comprenant le programme d'ordinateur décrit précédemment.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un exemple d'envoi d'un paquet ayant une taille supérieure à la valeur de taille de transmission maximum MTU d'un routage WAN et mettant en œuvre la correction de la valeur de taille de transmission maximum MTU dans un paquet d'un message de protocole de contrôle sur internet ICMP;
- la Figure 2 est un schéma fonctionnel montrant un exemple d'envoi d'un paquet ayant une taille supérieure à la valeur de taille de transmission maximum MTU d'un routage LAN-WAN et mettant en œuvre la correction de la valeur de taille de transmission maximum MTU dans un paquet d'un message de protocole de contrôle sur internet ICMP ;
- La figure 3 est un schéma montrant le cas où l'émetteur a modifié son paquet après le cas de la figure 1 ou 2 ;
- La Figure 4 est un diagramme d'étapes qui illustre un mode de mise en œuvre du procédé de correction de la valeur du taille de transmission maximum MTU.
- La figure 5 montre une portion d'un imprime écran illustrant un exemple de paquet IP à ne pas fragmenter contenant un protocole SIP.
- La figure 6 montre une portion d'un imprime écran illustrant un paquet d'un message de protocole de contrôle sur internet ICMP.

### Description détaillée de modes de réalisation

Dans la description de modes de réalisation qui va suivre et dans les figures des dessins annexés, les mêmes éléments ou des éléments similaires portent les mêmes références aux dessins.

Comme il a été exposé en introduction, différentes applications de la couche 7 peuvent être modifiées par le protocole de passerelle de couche d'application ALG, notamment le FTP et le SIP.

L'invention va être décrite à titre d'exemple avec l'envoi d'un paquet SIP.

Le protocole SIP a à de nombreuses applications telles que l'appel VoIP, la visiophonie, la messagerie instantanée, la réalité virtuelle ou même les jeux vidéo en ligne.

Le SIP partage de nombreuses similitudes avec le protocole HTTP comme le codage en ASCII et les codes de réponse.

Dans l'entête, on retrouve des informations telles que :
l'adresse IP de la source
l'adresse IP de la destination
le type de message (INVITE, ACK, OK, BYE, etc...)
le type de contenu du message (souvent SDP)
etc.

L'invention va être en particulier décrite pour un appel VoIP par le protocole SIP.

L'émetteur appelé aussi client, envoie des requêtes au serveur qui lui renvoie une réponse. Les requêtes de base sont :
- INVITE permet à un client de demander une nouvelle session,
- ACK confirme l'établissement de la session,
- CANCEL annule un INVITE en suspens,
- BYE termine une session en cours,
- OPTIONS permet de récupérer les capacités de gestion des usagers, sans ouvrir de session,
- REGISTER permet de s'enregistrer auprès d'un serveur d'enregistrement.

L'invention sera décrite avec un exemple de paquet SIP INVITE dans la suite mais bien entendu est uniquement à titre d'exemple.

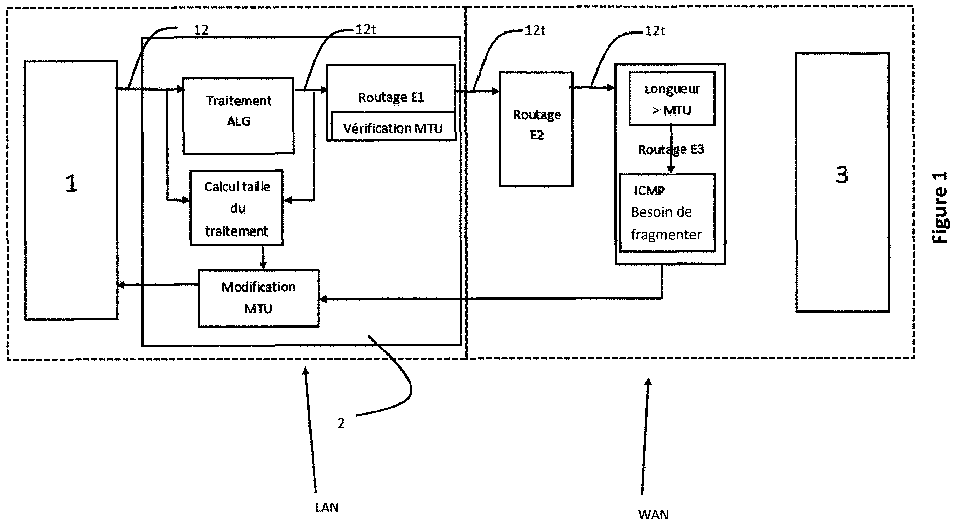

La figure 1 montre un exemple d'envoi du paquet SIP INVITE.

La figure 5 montre un exemple de paquet IP utilisant le Protocol SIP comprenant une requête INVITE. Le paquet SIP envoyé par l'émetteur peut comprendre par exemple pour un IPv4, en indicateur le champ Flag le bit 1 qui dit bit DF (Don't Fragment) (au contraire s'il est positionné à 0, la fragmentation est autorisée). Dans l'exemple décrit ci-dessous le bit 1 du champ Flag est positionné à 1 et donc la fragmentation est interdite. Le paquet IP de la figure 5 comprend l'indication ne pas fragmenter DF : don't fragment.

Le paquet IP de la figure 5 montre que sa taille « Total length » est de 1485 Octets.

L'émetteur 1 qui est par exemple un téléphone IP est dans un réseau privé LAN et envoie un paquet 12 de protocole SIP étiqueté DF ayant une requête INVITE dans une entrée privée de données configurée pour recevoir des données d'un réseau privé LAN, d'un routeur 2. Le routeur 2 est un dispositif qui sert de passerelle entre un réseau privée LAN et un réseau public WAN. Le routeur 2 comprend donc une entrée publique de données configurée pour recevoir des données d'un réseau privé WAN. Par entrée, on entend des données qui peuvent entrer ou sortir dans le routeur 2.

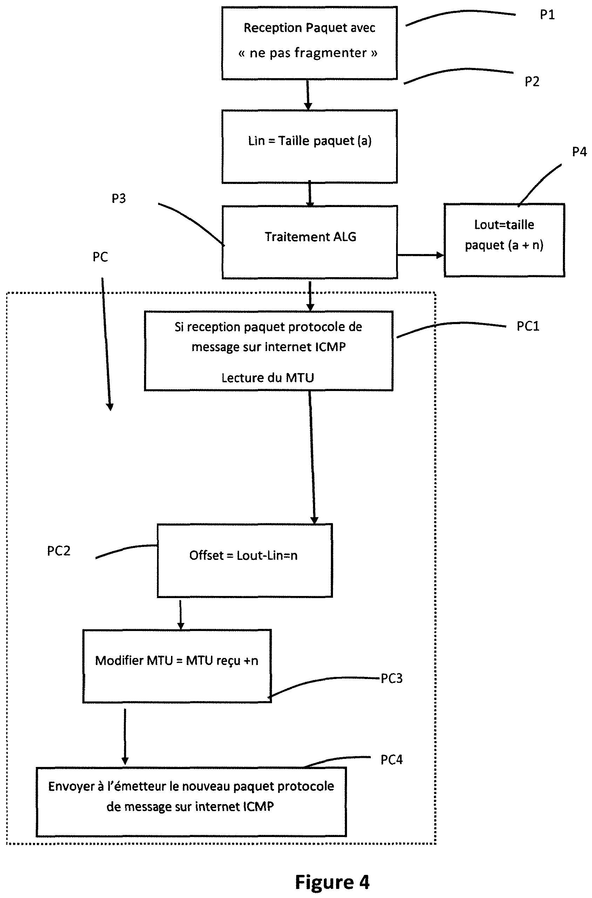

La figure 4 montre un diagramme d'étape du routeur 2 montrant une étape P1 de réception de ce paquet 12. Le paquet 12 est à destination d'un receveur 3 étant par exemple un ordinateur. Le routeur 2 réalise une étape P2 visible sur la figure 4 qui mémorise la valeur Lin de la taille du paquet 12 qui est en l'occurrence 1485 octets dans une mémoire de données permettant de mémoriser des données.

Le routeur 2 comprend une mémoire programme comprenant un protocole de passerelle de couche d'application ALG pour adapter le paquet 12 provenant du réseau privé LAN à un réseau public WAN. Le routeur réalise donc une étape P3 de traitement protocole de passerelle de couche d'application ALG du paquet 12 ce qui entraine des modifications de la couche d'application SIP, notamment les occurrences de l'adresse IP LAN qui sont remplacées par une autre adresse IP WAN ainsi que dans cet exemple la modification d'un port. Le paquet 12 devient alors un paquet traité 12t. Les modifications ont augmentées la taille Lin du paquet 12 qui passe de 1485 à la taille Lout du paquet traité 12t à 1495 octet dans cet exemple.

Le routeur 2 réalise une étape P4 qui mémorise la taille Lout du paquet traité 12t dans la mémoire de donnée. Le routeur 2 comprend ensuite, un routage E1 qui en l'occurrence vérifie la valeur de taille de transmission maximum MTU qui est de 1500 octets et le compare à la taille du paquet 12t.

Le paquet 12t est ensuite transféré dans le réseau Public par lequel il va passer par plusieurs routages, notamment le routage E3. Le routage E3 vérifie aussi la taille du paquet 12t par rapport à la valeur de sa taille de transmission maximum MTU qui est en l'occurrence de 1492 Octets.

La taille du paquet 12t étant supérieure à la taille de transmission maximum du routage E3 , le routage E3 renvoie en direction du téléphone 1 un paquet d'un message de protocole de contrôle sur internet ICMP. La figure 6 montre un exemple de paquet d'un message de protocole de contrôle sur internet ICMP pour être retransmis à l'émetteur 1. Dans ce paquet d'un message de protocole de contrôle sur internet ICMP, on peut voir un champ « MTU next hop » dont la valeur est de 1492, correspondant à la taille de transmission maximum MTU de ce routage E3.

Le paquet d'un message de protocole de contrôle sur internet passe par les mêmes routeurs par lequel le paquet traité 12t est passé et notamment passe par le routeur 2 pour passer du réseau public WAN au réseau privé LAN.

Le routeur 2 ayant reçu le paquet d'un message de protocole de contrôle sur internet ICMP, et ayant mémorisé la valeur de la taille du paquet 12 et du même paquet traité 12t peut procéder à un procédé de correction d'un paquet d'un message de protocole de contrôle sur Internet ICMP.

Un exemple de ce procédé de correction PC est représenté dans le diagramme d'étape sur la figure 4. Dans cet exemple, la modification d'une valeur de taille de transmission maximum MTU dans le paquet d'un message de protocole de contrôle sur internet ICMP est réalisée dès lors qu'un paquet d'un message de protocole de contrôle sur internet ICMP est reçu dans le routeur et que le paquet IP d'origine a été traité par un protocole de passerelle de couche d'application ALG. Le routeur 2 comprend donc une mémoire de programme pour effectuer ce procédé de correction. Le procédé de correction comprend une première étape PC1 de réception d'un paquet d'un message de protocole de contrôle sur internet ICMP et de lecture dans le paquet d'un message de protocole de contrôle sur Internet ICMP d'une valeur d'une unité de transmission maximale (MTU, maximum transmission unit) qui définit la taille de paquets de données maximale prise en charge dans le routage E3.

Le procédé de correction, dans ce mode de réalisation, comprend en outre une étape de calcul PC2 d'une valeur de la taille de traitement en comparant la longueur d'un paquet non traité par l'intégrateur de passerelle de couche d'application ALG et la taille du paquet traité par protocole de passerelle de couche d'application ALG. En l'occurrence, la valeur de la taille du paquet 12 non traité était de 1485 et la taille du paquet traité était de 1495 soit une valeur de la taille de traitement de 10.

Le procédé de correction comprend en outre une étape de modification PC3 du paquet d'un message de protocole de contrôle sur internet en écrasant la valeur de l'unité de transmission maximale par une valeur de taille de paquet maximale réelle qui est fonction de la valeur de la taille de traitement.

En l'occurrence, l'étape de modification PC3 comprend une soustraction de la valeur calculée de la taille de traitement qui était égale à 10 à la valeur du champ « MTU of next hop » qui était de 1492 du paquet d'un message de protocole de contrôle sur internet ICMP. Ainsi la valeur de taille de paquet maximale réelle dans le champ « taille de transmission maximum MTU of next hop » est de 1482 du paquet d'un message de protocole de contrôle sur internet ICMP modifié.

Enfin le procédé de correction comprend une étape d'envoi vers l'émetteur du paquet d'un message de protocole de contrôle sur internet modifié ICMP, dans lequel le champ taille de transmission maximum « MTU of next hop » est de 1482 et non 1492.

Il s'ensuit que l'émetteur 1 comprend l'erreur du fait que son paquet faisait 1485 et le modifie par exemple en supprimant un codec puis renvoie son paquet 12m avec le protocole SIP et la requête INVITE comprenant une taille inférieure à 1482 octets, par exemple 1480 octets.

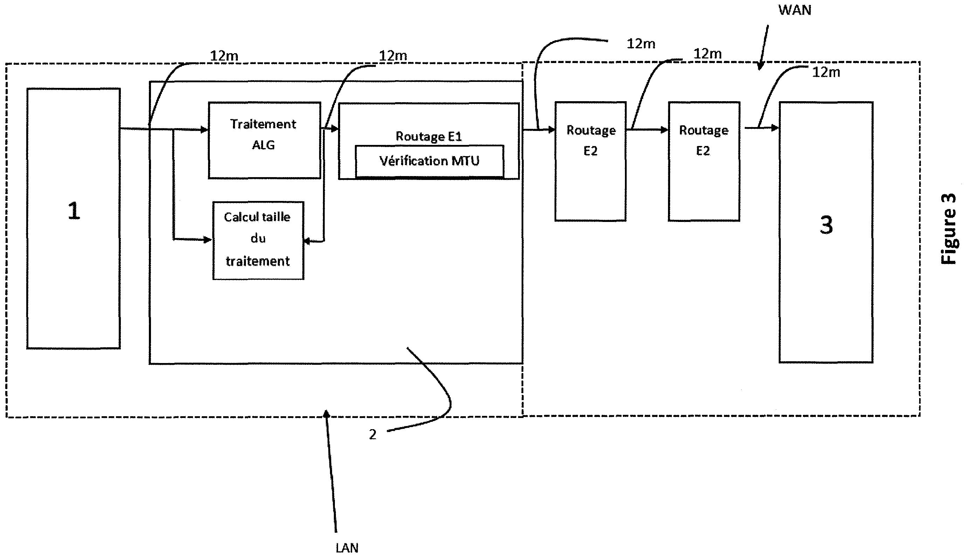

La figure 3 est un schéma montrant le cas où l'émetteur a modifié son paquet après le cas de la figure 1. Le paquet 12m est traité par le protocole de passerelle de couche d'application ALG. Un paquet 12mt sors du protocole de passerelle de couche d'application ALG avec une taille de 1490 octets par exemple, puis passe par différents routages E1, E2 E3, En jusqu'à arriver au récepteur 3.

Bien entendu, un autre routage, par exemple E4 non représenté peut avoir une taille de transmission maximum MTU inférieure à 1492, par exemple 1468 octets. Dans ce cas, si le paquet IP comprend toujours un flag DF (Don't Fragment), le procédé de protocole d'un message de contrôle sur internet ICMP recommence, puisque la taille du nouveau paquet 12mt est supérieure à la taille de transmission maximum MTU du routage E4. Un nouveau paquet d'un message de protocole de contrôle sur internet ICMP est donc envoyé du routage E4 au routeur 2, comprenant un champ taille de transmission maximum « MTU next hop » de 1468 octets. Le routeur 2 réalise donc l'étape de calcule PC2. En l'occurrence, la valeur de la taille du paquet 12 non traité était de 1480 et la taille du paquet traité était de 1490 pour passer la dernière valeur de taille de transmission maximum MTU de 1492 soit toujours la valeur de la taille de traitement de 10. Le routeur 2 réalise alors la modification de la taille de transmission maximum MTU en remplaçant 1468 par 1458 (1468 - 10).

Il s'ensuit que le routeur réalise l'étape d'envoi PC5 à l'émetteur 1 du paquet d'un message de protocole de contrôle sur internet ICMP comprenant la valeur de la taille de transmission maximum MTU de 1458 dans le champs « MTU next hop ».

Il s'en suit qu'à chaque réception d'un paquet d'un message de protocole de contrôle sur internet ICMP issue d'un paquet IP ayant été modifié par le protocole de passerelle de couche d'application ALG, on réalise l'étape de calcul PC2 et l'étape de modification PC3 et enfin l'étape d'envoi du paquet d'un message de protocole de contrôle sur internet ICMP modifié PC4. Ainsi, en cas de protocole de message de contrôle sur internet ICMP issue d'un paquet modifié par l'ALG, l'émetteur IP reçoit toujours un paquet d'un message de protocole de contrôle sur internet ICMP modifié. Cela a pour avantage d'éviter un second paquet d'un message de protocole de contrôle sur internet ICMP par le même hôte (routeur) puisque le traitement est pris en compte dès la première fois.

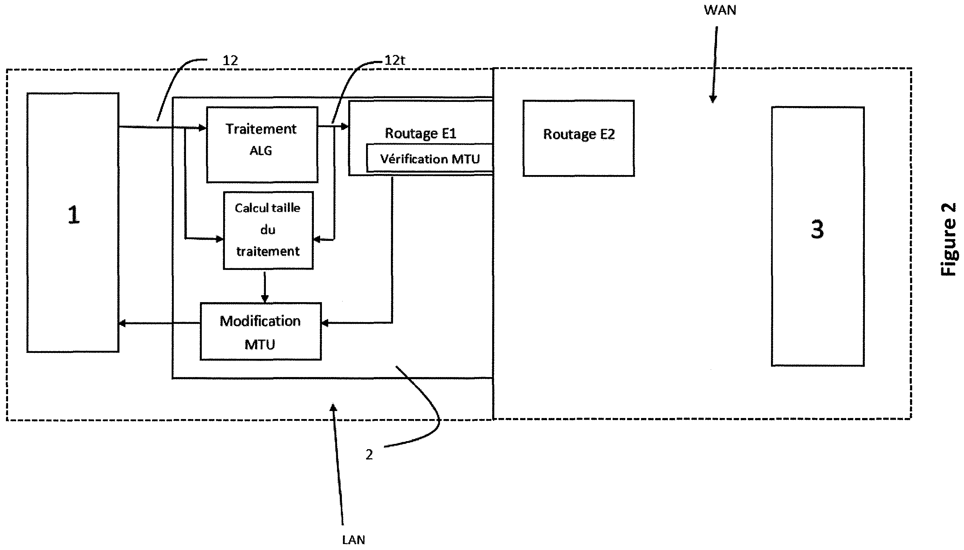

Le routeur 2 peut aussi, à la suite de la modification du paquet 12, envoyé par l'émetteur 1, par le protocole de passerelle de couche d'application ALG envoyer à l'émetteur 1 un paquet d'un message de protocole de contrôle sur internet ICMP si la taille du paquet modifié est supérieure à sa taille de transmission maximum MTU. La figure 2 représente un schéma fonctionnel montrant le routeur réalisant le protocole de passerelle de couche d'application ALG et le paquet d'un message de protocole de contrôle sur internet ICMP.

L'émetteur 1 envoie donc d'un réseau privé un paquet IP 12 pour un appel par VoIP utilisant le protocole SIP à un receveur 3 en passant par un réseau LAN comme dans l'exemple de la figure 1. Le receveur 3 peut être aussi dans un autre réseau privé LAN mais accessible uniquement par un réseau Public WAN.

Dans cet exemple d'appel, le paquet 12 qui a une taille Lin par exemple 1491 octets, a sa valeur de taille mémorisé comme dans l'exemple de la figure 1 dans une mémoire de donnée puis le paquet 12 est modifié par le protocole de passerelle de couche d'application ALG pour devenir un paquet traité 12t contenant 1501 octets. Le routeur 2 mémorise comme dans l'exemple de la figure 1, la taille Lout du paquet traité 12t dans une mémoire de donnée. Le routeur 2 effectue un calcul d'une valeur (n) de la taille de traitement en comparant la taille Lin du paquet 12 et la taille Lout du paquet 12t. Le routeur mémorise dans cet exemple la valeur n dans une structure « sk_buff » du paquet IP. Le routage 1 LAN-WAN vérifie la taille Lout du paquet 12t de 1501 octets par rapport à sa taille de transmission maximum MTU de 1500 octets. Le paquet 12t étant un paquet SIP marqué « ne pas fragmenter » DF, le routeur 2 envoie en direction de l'émetteur 1 un paquet d'un message de protocole de contrôle sur internet ICMP contenant une valeur de taille de transmission maximum MTU en fonction de la valeur n mémorisée dans le paquet IP.

En l'occurrence, la mémoire de programme comprend un programme d'écriture pour modifier le paquet d'un message de protocole de contrôle sur internet ICMP en écrasant la valeur de l'unité de transmission maximale par une valeur de taille de paquet maximale réelle qui est la valeur de la taille de transmission maximum MTU du routeur soit 1500 soustrait de la valeur de traitement n qui est de 10.

La mémoire programme comprend en outre un programme d'envoi vers une des entrées privées ou sortie ayant reçu d'un émetteur du message le paquet d'un message de protocole de contrôle sur internet modifié ICMP.

Selon un autre exemple on modifie la valeur de la taille de transmission maximum MTU par la valeur de la taille de transmission maximum MTU reçu soustrait de la somme de la valeur de la taille de traitement calculée à l'étape PC2 et d'une valeur prédéterminée de marge de sécurité. La marge de sécurité peut par exemple être égale à 1 octet.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé de correction d'un paquet d'un message de protocole de contrôle sur Internet, ICMP, lors d'un acheminement d'un paquet (12, 12t) entre un réseau privé, LAN, et un réseau public, WAN, ayant été traité par un intégrateur de passerelle de couche d'application, ALG, comprenant des étapes :
• de lecture (PC1) d'un paquet d'un message de protocole de contrôle sur Internet, ICMP, comprenant un message « besoin de fragmenter » et une valeur d'une unité de transmission maximale, MTU, qui définit la taille de paquets de données maximale prise en charge dans un protocole de communication utilisé par un routage,
• de calcul (PC2) d'une valeur (n) d'une taille de traitement en comparant une taille (Lin) d'un paquet non traité (12) par l'intégrateur de passerelle de couche d'application, ALG, et une taille (Lout) du même paquet traité (12t) après traitement par l'intégrateur de passerelle de couche d'application, ALG,
• de modification (PC3) du paquet d'un message de protocole de contrôle sur Internet, ICMP, en écrasant la valeur de l'unité de transmission maximale, MTU, par une valeur de taille de paquet maximale réelle qui est fonction de la valeur de la taille de traitement (n),
• d'envoi (PC4), vers un émetteur (1) ayant envoyé le paquet non traité (12), du paquet d'un message de protocole de contrôle sur internet modifié, ICMP.

2. Procédé de correction d'un paquet d'un message de protocole de contrôle sur Internet, ICMP, selon la revendication 1 comprenant en outre une étape de :
• calcul de la valeur de taille de paquet maximale réelle en soustrayant la valeur (n) calculée de la taille de traitement à la valeur de l'unité de transmission maximale du paquet d'un message de protocole de contrôle sur Internet, ICMP.

3. Procédé de correction d'un paquet d'un message de protocole de contrôle sur Internet, ICMP, selon la revendication 1 ou 2 comprenant en outre une étape de :
• mesure de la taille (Lin) du paquet (12) non traité,
• mémorisation de la taille (Lin) du paquet (12) non traité,
• mesure de la taille (Lout) du même paquet (12t) après traitement par l'intégrateur de passerelle de couche d'application, ALG,
• mémorisation de la valeur (n) de la taille de traitement calculée.

4. Procédé de traitement d'un paquet entre un réseau privé et un réseau public comprenant le procédé de correction d'un paquet d'un message de protocole de contrôle sur Internet, ICMP, selon l'une des revendications 1 à 3, comprenant en outre une étape de :
• réception d'un paquet (12), marqué ne pas fragmenter, non traité par l'intégrateur de passerelle de la couche d'application, ALG,
• transformation du paquet(12) non traité en un paquet (12t) traité après traitement par l'intégrateur de passerelle de la couche d'application, ALG.

5. Procédé de traitement d'un paquet entre un réseau privé et un réseau public selon la revendication 4, comprenant en outre une étape de :
• génération d'un paquet d'un message de protocole de contrôle sur Internet, ICMP, si la taille du paquet traité (12t) est supérieure à une taille de valeur d'une unité de transmission maximale, MTU, et dans lequel l'étape de modification du paquet d'un message de protocole de contrôle sur Internet, ICMP, est réalisée.

6. Procédé de traitement d'un paquet entre un réseau privé et un réseau public selon l'une des revendications 4 à 5, dans lequel la couche d'application du message est un protocole de signalisation, SIP.

7. Passerelle comportant une couche d'application, ALG, permettant la communication entre un réseau privé et un réseau public, dans lequel le dispositif de passerelle comprend :
• une entrée privée de données configurée pour recevoir des données d'un réseau privé, LAN,
• une entrée publique de données configurée pour recevoir des données d'un réseau public, WAN,
• une mémoire de données permettant de mémoriser des données
• une mémoire de programme comprenant :
i) un programme de lecture (PC1) d'un paquet d'un message de protocole de contrôle sur Internet, ICMP, comprenant un message besoin de fragmenter et une valeur d'une unité de transmission maximale, MTU, qui définit la taille de paquets de données maximale de données maximale prise en charge dans un protocole de communication utilisé par un routage,
ii) un programme de calcul (PC2) d'une valeur (n) de la taille de traitement en comparant la taille (Lin) d'un paquet (12) non traité par l'intégrateur de passerelle de couche d'application, ALG, et la taille (Lout) du paquet traité (12t) par l'intégrateur de passerelle de couche d'application, ALG,
iii) un programme d'écriture (PC3) pour modifier le paquet d'un message de protocole de contrôle sur Internet, ICMP, en écrasant la valeur de l'unité de transmission maximale, MTU, par une valeur de taille de paquet maximale réelle qui est fonction de la valeur (5) de la taille de traitement,
iv) un programme d'envoi (PC4) vers un émetteur ayant envoyé le paquet non traité (12t) dans l'entrée privée, du paquet d'un message de protocole de contrôle sur internet modifié, ICMP.

8. Produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé selon l'une quelconque des revendications 1 à 6.

9. Support d'enregistrement de données lisible par une machine comprenant un processeur, comprenant le programme d'ordinateur selon la revendication 8.

## Patentansprüche

1. Korrekturverfahren eines Pakets einer Kontrollprotokoll-Nachricht im Internet, ICMP, bei einer Verbringung eines Pakets (12, 12t) zwischen einem privaten Netz, LAN, einem öffentlichen Netz, WLAN, das von einem Gateway-Integrator der Anwendungsschicht, ALG, bearbeitet wird, umfassend Schritte:
• Lesen (PC1) eines Pakets einer Kontrollprotokoll-Nachricht im Internet, ICMP, umfassend eine Nachricht "Fragmentierbedarf" und einen Wert einer maximalen Übertragungseinheit, MTU, die die maximale Größe von Datenpaketen definiert, die in einem von einem Router verwendeten Kommunikationsprotokoll übernommen wird;
• Berechnung (PC2) eines Wertes (N) einer Verarbeitungsgröße per Vergleich einer Größe (Lin) eines vom Gateway-Integrator der Anwendungsschicht, ALG, nicht verarbeiteten Pakets (12) und eine Größe (Lout) desselben verarbeiteten Pakets (12t) nach der Verarbeitung durch den Gateway-Integrator der Anwendungsschicht, ALG,
• Änderung (PC3) des Pakets einer Kontrollprotokoll-Nachricht im Internet, ICMP durch Überschreiben des Wertes der maximalen Übertragungseinheit, MTU, durch einen realen maximalen Paketgrößenwert, der von dem Wert der Bearbeitungsgröße (n) abhängt,
• Versand (PC4) des Pakets einer abgeänderten Kontrollprotokoll-Nachricht im Internet, ICMP, an einen Sender (1), der das nicht verarbeitete Paket (12) versandt hat.

2. Korrekturverfahren eines Pakets einer Kontrollprotokoll-Nachricht im Internet, ICMP, gemäß Anspruch 1, umfassend darüber hinaus einen Schritt:
• Berechnung des realen maximalen Paketgrößenwertes durch Subtrahieren des berechneten Wertes (N) der Verarbeitungsgröße von dem Wert der maximalen Übertragung des Pakets einer Kontrollprotokoll-Nachricht im Internet;

3. Korrekturverfahren eines Pakets einer Kontrollprotokoll-Nachricht im Internet, ICMP, gemäß Anspruch 1 oder 2, umfassend darüber hinaus einen Schritt:
• Messung der Größe (Lin) des nicht verarbeiteten Pakets (12),
• Speicherung der Größe (Lin) des nicht verarbeiteten Pakets (12),
• Messung der Größe (Lout) desselben Pakets (12t) nach der Verarbeitung durch den Gateway-Integrator der Anwendungsschicht, ALG,
• Speichern des Wertes (n) der berechneten Verarbeitungsgröße.

4. Verarbeitungsverfahren eines Pakets zwischen einem privaten Netzwerk und einem öffentlichen Netzwerk, umfassend das Korrekturverfahren eines Pakets einer Kontrollprotokoll-Nachricht im Internet, ICMP, gemäß einem der Ansprüche 1 bis 3, umfassend darüber hinaus:
• Empfang eines Pakets (12), das markiert ist, um nicht fragmentiert zu werden, das vom Gateway-Integrator der Anwendungsschicht, ALG, nicht verarbeitet wird,
• Umwandlung des nicht verarbeiteten Pakets (12) in ein verarbeitetes Paket (12t) nach der Verarbeitung durch den Gateway-Integrator der Anwendungsschicht, ALG.

5. Verarbeitungsverfahren eines Pakets zwischen einem privaten Netzwerk und einem öffentlichen Netzwerk gemäß Anspruch 4, umfassend darüber hinaus einen Schritt:
• Erzeugung eines Pakets einer Kontrollprotokoll-Nachricht im Internet, ICMP, wenn die Größe des verarbeiteten Pakets (12t) größer ist als eine Wertgröße einer maximalen Übertragungseinheit, MTU, und bei dem der Abänderungsschritt des Pakets einer Kontrollprotokoll-Nachricht im Internet, ICMP, realisiert wird.

6. Verarbeitungsverfahren eines Pakets zwischen einem privaten Netzwerk und einem öffentlichen Netzwerk gemäß einem der Ansprüche 4 bis 5, bei dem die Anwendungsschicht der Nachricht ein Signalisationsprotokoll, SIP, ist.

7. Gateway, umfassend eine Anwendungsschicht, ALG, die die Kommunikation zwischen einem privaten Netzwerk und einem öffentlichen Netzwerk zulässt, bei dem die Gateway-Vorrichtung umfasst:
• einen privaten Dateneingang, der zum Empfangen der Daten eines privaten Netzwerks, LAN, ausgestaltet ist,
• einen öffentlichen Dateneingang, der zum Empfangen der Daten eines öffentlichen Netzwerks, WAN, ausgestaltet ist,
• einen Datenspeicher, der das Speichern der Daten zulässt
• einen Programmspeicher, umfassend:
i.) ein Leseprogramm (PC1) eines Pakets einer Kontrollprotokoll-Nachricht im Internet, ICMP, umfassend eine Bedarfsnachricht zum Fragmentieren und einen Wert einer maximalen Übertragungseinheit MTU, die die maximale Größe von Datenpaketen definiert, die in einem von einem Router verwendeten Kommunikationsprotokoll übernommen werden,
ii.) ein Berechnungsprogramm (PC2) eines Wertes (n) der Verarbeitungsgröße per Vergleich der Größe (Lin) eines nicht vom Gateway-Integrator der Anwendungsschicht, ALG, verarbeiteten Pakets (12) mit der Größe (Lout) des vom Gateway-Integrator der Anwendungsschicht, ALG, verarbeiteten Pakets (12t),
iii.) ein Schreibprogramm (PC3) zum Abändern des Pakets einer Kontrollprotokoll-Nachricht im Internet, ICMP, durch Überschreiben des Wertes der maximalen Übertragungseinheit MTU, durch einen realen, maximalen Paketgrößenwert, der von dem Wert (5) der Verarbeitungsgröße abhängt,
iv.) ein Versandprogramm (PC4) des Pakets einer abgeänderten Kontrollprotokoll-Nachricht im Internet, ICMP, zu einem Sender, der das nicht verarbeitete Paket (12t) in einen privaten Eingang gesendet hat.

8. Produkt "Computerprogramm", das direkt in den internen Speicher eines digitalen Computers ladbar ist, umfassend Softwarecode-Abschnitte, die, wenn das genannte Programm von einem Computer ausgeführt ist, diesen dazu veranlassen, alle Schritte des Verfahrens gemäß irgendeinem der Ansprüche 1 bis 6 umzusetzen.

9. Von einer Maschine lesbarer Datenspeicher-Träger, umfassend einen Prozessor, umfassend das Computerprogramm gemäß Anspruch 8.

## Claims

1. Method for correcting a packet of an Internet control message protocol, ICMP, during routing of a packet (12, 12t) between a private network, LAN, and a public network, WAN, having been processed by an application level gateway integrator, ALG, comprising the steps of:
• reading (PC1) a packet of an Internet control message protocol, ICMP, comprising a "fragmentation needed" message and a maximum transmission unit, MTU, value which defines the maximum size of data packets handled in a communication protocol used by a routing,
• calculating (PC2) a value (n) of a processing size by comparing a size (Lin) of a packet (12) not processed by the application level gateway integrator, ALG, and a size (Lout) of the same processed packet (12t) after processing by the application level gateway integrator, ALG,
• modifying (PC3) the packet of an Internet control message protocol, ICMP, by overwriting the maximum transmission unit, MTU, value with an actual maximum packet size value which is a function of the processing size value (n),
• sending (PC4), to a transmitter (1) having sent the non-processed packet (12), the modified packet of an Internet control message protocol, ICMP.

2. Method for correcting a packet of an Internet control message protocol, ICMP, according to claim 1 further comprising a step of:
• calculating the actual maximum packet size value by subtracting the calculated value (n) of the processing size from the maximum transmission unit value of the packet of an Internet control message protocol, ICMP.

3. Method for correcting a packet of an Internet control message protocol, ICMP, according to claim 1 or 2 further comprising a step of:
• measuring the size (Lin) of the non-processed packet (12),
• memorising the size (Lin) of the non-processed packet (12),
• measuring the size (Lout) of the same packet (12t) after processing by the application level gateway integrator, ALG,
• memorising the calculated value (n) of the processing size.

4. Method for processing a packet between a private network and a public network comprising the method for correcting a packet of an Internet control message protocol, ICMP, according to one of claims 1 to 3, further comprising a step of:
• receiving a packet (12), marked "don't fragment", not processed by the application level gateway integrator, ALG,
• transforming the non-processed packet (12) into a processed packet (12t) after processing by the application level gateway integrator, ALG.

5. Method for processing a packet between a private network and a public network according to claim 4, further comprising a step of:
• generating a packet of an Internet control message protocol, ICMP, if the size of the processed packet (12t) is larger than a size of maximum transmission unit, MTU, value, and wherein the step of modifying the packet of an Internet control message protocol, ICMP, is carried out.

6. Method for processing a packet between a private network and a public network according to one of claims 4 to 5, wherein the application level of the message is a signalling protocol, SIP.

7. Gateway comprising an application level, ALG, enabling communication between a private network and a public network, wherein the gateway device comprises:
• a private data input configured to received data from a private network, LAN,
• a public data input configured to received data from a public network, WAN,
• a data memory making it possible to memorise data,
• a programme memory comprising:
i) a programme for reading (PC1) a packet of an Internet control message protocol, ICMP, comprising a "fragmentation needed" message and a maximum transmission unit (MTU) value, which defines the maximum size of data packets handled in a communication protocol used by a routing,
ii) a programme for calculating (PC2) a value (n) of the processing size by comparing the size (Lin) of a packet (12) not processed by the application level gateway ALG integrator and the size (Lout) of the packet (12t) processed by the application level gateway ALG integrator,
iii) a writing programme (PC3) for modifying the packet of an Internet control message protocol, ICMP, by overwriting the maximum transmission unit, MTU, value with an actual maximum packet size value which is a function of the value (5) of the processing size,
iv) a programme for sending (PC4), to a transmitter having sent the non-processed packet (12t) in the private input, the modified packet of an Internet control message protocol, ICMP.

8. "Computer programme" product directly loadable in the internal memory of a digital computer, comprising software code portions which, when said programme is executed by a computer, lead said computer to implement all the steps of the method according to any of claims 1 to 6.

9. Data recordable support readable by a machine comprising a processor, comprising the computer programme according to claim 8.
